# EUROPÄISCHE PATENTSCHRIFT

(11) **EP 2 015 079 B1**
(45) Veröffentlichungstag und Bekanntmachung des Hinweises auf die Patenterteilung: **02.05.2012**
(21) Anmeldenummer: 08009194.5
(22) Anmeldetag: 19.05.2008
(51) Int. Cl.: G01D 11/24, G01D 11/30, G01P 1/00

(54) **Halteteil zur Montage eines Sensors**
Holding section for mounting a sensor
Partie de retenue destinée au montage d'un capteur

(30) Priorität: 21.05.2007 DE 102007024230
(43) Veröffentlichungstag der Anmeldung: 14.01.2009
(73) Patentinhaber: Omron Electronics Manufacturing of Germany GmbH, 71154 Nufringen (DE)
(72) Erfinder: Felger, Harry, 71384 Weinstadt (DE); Glaser, Siegfried, 71549 Auenwald (DE); Schurer, Martin, 72189 Vöhringen (DE); Yoshida, Hiroshi, 70174 Stuttgart (DE)
(74) Vertreter: Hössle Patentanwälte Partnerschaft

(56) Entgegenhaltungen:
- DE-A1- 3 919 109
- DE-A1- 4 423 081
- FR-A- 2 627 620

## Beschreibung

Die Erfindung betrifft ein Halteteil zur Montage eines Sensors, eine Anordnung zur Montage und Demontage eines Sensors sowie ein Verfahren zur Montage und Demontage eines Sensors.

Sensoren werden in der Regel mit Schrauben und/oder Schraubenmuttern an Vorrichtungen befestigt. Hierzu ist es nötig, dass beide Seiten einer Wandung einer Vorrichtung, an der der Sensor zu befestigen ist, zugänglich sind. Weiterhin muss der Sensor zunächst in einer Position gehalten werden, wobei eine Orientierung des Sensors, die für einen späteren Betrieb des Sensors wichtig ist, berücksichtigt werden muss. Die Befestigung des geeignet anzuordnenden und somit auszurichtenden Sensors erfolgt durch Befestigung der Schrauben bzw. Muttern von beiden Seiten. Davon abgesehen, dass hierfür regelmäßig Werkzeuge benutzt werden müssen, kann die Montage weiterhin dadurch erschwert werden, dass diese bspw. an schlecht zugänglichen Stellen der Wandung und somit der Vorrichtung vorzunehmen ist.

Falls der Sensor beispielsweise für eine Wartung oder Reparatur entfernt werden muss, ist üblicherweise ein ähnlicher Aufwand wie bei der Montage erforderlich, da die Schrauben bzw. Muttern, über die der Sensor vormals befestigt worden ist, wieder gelöst werden müssen. Somit sind bei der Montage und weiterhin bei der Demontage mehrere Teile, d. h. der Sensor sowie die Befestigungsmittel, bspw. die Schrauben oder Muttern, und außerdem das Werkzeug zu handhaben, wobei derartige Teile während der Montage oder Demontage herunterfallen können. Sollte dies in einer komplex ausgebildeten Maschine geschehen, können diese Teile in unzugänglichen Bereichen dieser Maschine verloren gehen. Weiterhin ist eine derartige Montage zeitaufwendig.

Außerdem wird eine Packungsdichte und eine geometrische Flexibilität für eine Anwendung eines derartigen Sensors, wenn dieser mit Schrauben oder Muttern beispielsweise über ein als ein Schraubenschlüssel ausgebildetes Werkzeug zu montieren ist, begrenzt. Dabei bestimmen u. a. die Ausmaße bzw. Dimensionen des Werkzeugs die Größe des Sensors.

Eine Sensorbefestigung ist aus der deutschen Patentschrift DE 10 2004 004 851 B4 bekannt. Hierbei wird ein Sensor mit zwei Befestigungselementen an einer Montagewand befestigt, wobei ein erstes Befestigungselement an einer Vorderseite und ein zweites Befestigungselement an einer Rückseite der Montagewand anzuordnen ist. An einer Zylinderfläche eines Gehäuses des Sensors ist ein Aussengewinde angebracht, das durch ebene Basisflächen unterbrochen ist. Das erste Befestigungselement für den Sensor besteht aus einer Profilscheibe, an der Laschen angebracht sind, die den Sensor an den Stellen übergreifen, an denen das Aussengewinde durch die Basisflächen unterbrochen ist. Weiterhin sind zur Verbindung der Profilscheibe mit dem Sensor an den Laschen und den Basisflächen zusammenwirkende Rastelemente vorgesehen. Das zweite Befestigungselement ist als eine Rastscheibe ausgebildet.

Eine Klemmbuchse für einen Stabsensor ist aus der deutschen Patentschrift DE 32 29 207 C2 bekannt. Diese Klemmbuchse ist zur Fixierung und Justierung des Stabsensors in einer Bohrung eines Halteteils vorgesehen. Dazu weist die Klemmbuchse mehrere im wesentlichen achsparallel verlaufende, federnde, nach außen gebogene Zungen auf, die sich in einem montierten Zustand des Stabsensors auf diesem abstützen. Diese Klemmbuchse wird über den Sensor in der Bohrung eingepresst, so dass auf diese Weise ebenfalls eine Befestigung des Sensors erfolgt.

Das deutsche Gebrauchsmuster DE 88 15 130 U1 betrifft eine Montagebüchse, die insbesondere für einen stabförmigen elektromagnetischen Sensor vorgesehen ist. Dabei weist diese Montagebüchse mehrere federnde Zungen auf, über die ein Körper des Sensors innerhalb der Montagebüchse, wenn diese in einem Bauteil angeordnet ist, eingeklemmt wird. Auch hier erfolgt eine endgültige Sicherung der Montagebüchse, indem diese durch den Sensor eingeklemmt wird.

Ein in einem festgelegten Abstand zu einem anderen Bauteil zu montierender Sensor ist in der deutschen Offenlegungsschrift DE 44 23 081 offenbart. Bei einer Montage wird der Sensor in einer ortsfest zu befestigenden Hülse angeordnet. Dabei weist das Gehäuse des Sensors radial vorspringende Nasen auf, die in Montagestellung mit ihrer Aussenkontur in radial nach außen gerichtete Taschen einer Innenmantelfläche der Hülse greifen. Es ist weiterhin vorgesehen, dass erste Nasen an einer Ebene innerhalb der Hülse angeordnet sind und zweite Nasen außenseitig über einen Flansch der Hülse greifen und dort auf Rampen abgestützt sind. Zur Montage ist der Sensor zudem relativ zu der Hülse zu drehen.

Die deutsche Offenlegungsschrift DE 10 2004 062 087 A1 beschreibt eine Befestigungsvorrichtung eines Sensors. Mit dieser Befestigungsvorrichtung ist es möglich, den Sensor in einer Öffnung eines Bauteilgehäuses zu montieren. Hierzu weist diese Befestigungsvorrichtung Haken auf, die bei einer Montage des Sensors am Bauteilgehäuse zusammengedrückt werden und sich dann in eine Hinterschneidung hinein entfalten können, so dass diese Haken an einer Abdeckwand des Bauteilgehäuses in kraftschlüssige Anlage kommen. Bei einer Demontage des Sensors ist vorgesehen, dass zum Entfernen der Abdeckwand Schrauben gelöst werden müssen.

Vor diesem Hintergrund werden ein Halteteil und eine Anordnung für einen Sensor sowie ein Verfahren zur Montage und Demontage eines Sensors mit den Merkmalen der unabhängigen bzw. nebengeordneten Patentansprüche vorgestellt.

Die Erfindung betrifft ein Halteteil zur Montage eines Sensors in einer Öffnung einer Vorrichtung. Das Halteteil weist mindestens zwei Montagemodule auf, die dazu ausgebildet sind, einen Abschnitt der Vorrichtung gemeinsam derart zu beaufschlagen, dass das Halteteil nach erfolgtem Einsetzen in der Öffnung an der Vorrichtung arretiert ist. Weiterhin weist das Halteteil mindestens ein Verrastungsmodul auf, das dazu ausgebildet ist, mit einer Außenwandung des Sensors zusammenzuwirken, so dass der Sensor über das Halteteil an der Vorrichtung zu montieren ist. Zur Demontage ist der Sensor aus dem Halteteil herauszunehmen, wobei das mindestens eine erste Montagemodul den Abschnitt der Vorrichtung derart beaufschlagt, dass das Halteteil in der Öffnung verbleibt.

Das Halteteil ist jedoch auch nur zur Montage des Sensors in der Öffnung der Vorrichtung geeignet. Hierzu sind die mindestens zwei Montagemodule dazu ausgebildet, den Abschnitt der Vorrichtung gemeinsam derart zu beaufschlagen, dass das Halteteil nach erfolgtem Einsetzen in der Öffnung an der Vorrichtung arretiert ist. Somit ist die Montage des Sensors mit dem Halteteil unabhängig von der Demontage möglich. Dies bedeutet, dass nach einer erfolgten Montage des Sensors eine Demontage nicht erforderlich ist.

Somit ist dieses Halteteil selbstverriegelnd bzw. selbstarretierend ausgebildet, so dass eine Befestigung des Halteteils an der Vorrichtung ohne weitere Hilfs- bzw. Befestigungsmittel erfolgen kann. Das Halteteil ist in Ausgestaltung derart ausgebildet, dass es allein an der Vorrichtung befestigt werden kann, ohne dass hierzu bspw. der Sensor als stabilisierendes Mittel erforderlich ist.

In Ausgestaltung des insbesondere selbstverriegelnden Halteteils können die mindestens zwei Montagemodule derart ausgebildet und/oder angeordnet sein, dass der Abschnitt der Vorrichtung zwischen den mindestens zwei Montagemodulen anzuordnen ist, so dass diese mindestens zwei Montagemodule den Abschnitt der Vorrichtung dadurch gemeinsam beaufschlagen, indem die Montagemodule den Abschnitt umgreifen und/oder einklemmen.

Es ist üblicherweise vorgesehen, dass es sich bei dem Abschnitt um einen Teil einer Wandung der Vorrichtung handelt, wobei dieser Abschnitt bzw. Teil unmittelbar an die Öffnung angrenzt und diese Öffnung demnach begrenzt, so dass der Abschnitt demnach auch als Rand oder Randbereich der Öffnung ausgebildet sein kann.

Dabei kann mindestens ein erstes Montagemodul als Teil eines Grundkörpers des Halteteils relativ zu diesem Grundkörper flexibel beweglich und weiterhin dazu ausgebildet sein, bei der Montage des Halteteils an der Vorrichtung entlang zu gleiten. Üblicherweise ist dieses mindestens eine erste Montagemodul weitgehend senkrecht zu einer Bewegungsrichtung des Halteteils bei dessen Montage bzw. Demontage beweglich. Dabei ist das mindestens eine erste Montagemodul über ein elastisch verformbares Verbindungselement mit dem Grundkörper verbunden, das eine relative Bewegung des mindestens einen ersten Montagemoduls relativ zu dem Grundkörper ermöglicht.

Ferner kann das mindestens eine erste Montagemodul keilförmig ausgebildet sein und einen spitzen und einen breiten Wirkbereich aufweisen. Dabei ist ein spitzer Wirkbereich des mindestens einen ersten Montagemoduls in Einbaurichtung, in der das Halteteil beim Einsetzen in die Öffnung zu bewegen und somit zu schieben ist, orientiert. Ein breiter Wirkbereich des mindestens einen ersten Montagemoduls ist entgegen dieser Einbaurichtung orientiert und weiterhin dazu ausgebildet, bei einer Bewegung des Halteteils entgegen der Einbaurichtung gegen den Abschnitt der Vorrichtung zu drücken. Durch letztgenannte Maßnahme wird das Halteteil nach erfolgtem Einsetzen in der Öffnung bei einer Bewegung entgegen der Einbaurichtung in der Öffnung arretiert.

In weiterer Ausgestaltung kann mindestens ein zweites Montagemodul an dem Halteteil bzw. dem Grundkörper des Halteteils starr und unbeweglich ausgebildet sein. Weiterhin kann dieses mindestens eine zweite Montagemodul dazu ausgebildet sein, an dem Abschnitt der Vorrichtung anzuliegen, sobald dieses zweite Montagemodul bei einem Einbau des Halteteils den Abschnitt erreicht. Somit umgreift dieses mindestens eine zweite Montagemodul den Abschnitt bzw. einen Bereich der Wandung, der an die Öffnung angrenzt, an mindestens einer Position. Falls nur ein zweites derartiges Montagemodul vorgesehen ist, kann es als umlaufender Kragen, Saum oder verbreiteter Rand ausgebildet sein.

Mehrere zweite Montagemodule können als Rastnasen, die sich an einer Vorderseite des Grundkörpers des Halteteils umlaufend erstrecken, ausgebildet sein. Es ist vorgesehen, dass diese zweiten Montagemodule gegen die Wandung drücken und somit eine insbesondere eigenständige Bewegung des Halteteils in Einbaurichtung verhindern.

Gemäß einer weiteren Ausführungsform kann das Halteteil einstückig ausgebildet sein, wobei die mindestens zwei Montagemodule und das mindestens eine Verrastungsmodul als Komponenten des Grundkörpers des Halteteils miteinander verbunden sind. Bei der Herstellung kann das Halteteil mit sämtlichen Komponenten aus einem üblicherweise zusammenhängenden Stück geformt werden.

Ferner ist denkbar, dass das mindestens eine Verrastungsmodul keilförmig ausgebildet ist und dabei bspw. einen in Einbaurichtung orientierten spitzen Wirkbereich aufweist.

In einer Variante kann das mindestens eine Verrastungsmodul des Halteteils dazu ausgebildet sein, sich als Teil des Grundkörpers des Halteteils relativ zu diesem Grundkörper flexibel bewegen zu können. Eine Bewegung des mindestens einen Verrastungsmodul relativ zu dem Grundkörper erfolgt in der Regel weitgehend senkrecht zu einer Richtung, in der der Sensor bei der Montage bewegt wird oder zu bewegen ist. Das mindestens eine Verrastungsmodul ist üblicherweise über ein elastisch verformbares Verkleidungselement mit dem Grundkörper verbunden, dass eine relative Bewegung des mindestens einen Verrastungsmoduls relativ zu dem Grundkörper ermöglicht.

Eine erfindungsgemäße Anordnung zur Montage und Demontage eines Sensors in einer Öffnung einer Vorrichtung weist ein voranstehend beschriebenes Halteteil und einen in der Öffnung der Vorrichtung anzuordnenden Sensor auf.

Diese Anordnung kann jedoch lediglich zur Montage des Sensors unabhängig von der Demontage ausgebildet sein.

Dabei kann dieses Halteteil der Anordnung in der Öffnung der Vorrichtung von selbst arretierbar sein, so dass das Halteteil selbstverriegelnd ausgebildet ist.

Bei einer Ausgestaltung der Anordnung kann vorgesehen sein, dass mindestens ein Verrastungsmodul des Halteteils vorgesehen und dazu ausgebildet ist, mit mindestens einem als Ausnehmung ausgebildeten Einrastmodul an der Außenwandung des Sensors zusammenzuwirken. Die Anordnung kann eine beliebige Anzahl von Montagemodulen und Verrastungsmodulen aufweisen, die an dem Halteteil innen und/oder außen umlaufend angeordnet sein können.

In einer weiteren Variante können mehrere Einrastmodule einer bspw. zylindrischen Außenwandung des Sensors entlang einer Zylinderachse hintereinander angeordnet sein. Somit ist es möglich, dass die Verrastungsmodule des Halteteils bei der Montage in verschiedene Einrastmodule eingreifen und/oder einschnappen können, so dass eine Position des Sensors relativ zu dem Halteteil und somit der Vorrichtung variabel wählbar ist.

Außerdem kann die Außenwandung des Sensors in einer Variante auch wie ein Schraubengewinde ausgebildet sein, so dass die Verrastungsmodule in Einrastmodule, die als Kerben oder Gewindegänge eines derartigen Schraubengewindes ausgebildet sind, eingreifen können. In diesem Fall kann weiterhin vorgesehen sein, dass eine Vielzahl zweiter Verrastungsmodule an dem Halteteil entlang eines Kreises angeordnet sind. Somit kann der Sensor durch schnelles Einschieben in das Halteteil vorpositioniert werden, wobei die Verrastungsmodule nacheinander in die Einrastmodule ein- und ausschnappen bzw. -rasten. Eine genaue Positionierung des Sensors kann nachfolgend durch Drehen des Sensors relativ zu den Verrastungsmodulen erfolgen.

Ferner kann vorgesehen sein, dass das mindestens eine Verrastungsmodul des Halteteils und das mindestens eine Einrastmodul an der Außenwandung des Sensors zueinander passförmig ausgebildet sind. Eine derartige Passförmigkeit ist jedoch nicht zwingend erforderlich.

Es ist üblicherweise vorgesehen, dass das mindestens eine Verrastungsmodul während eines Anordnens oder Einschiebens des Sensors zunächst entlang der Außenwandung des Sensors gleiten und dann in das mindestens eine Einrastmodul einrasten, eingreifen und/oder einschnappen kann, wobei das mindestens eine Verrastungsmodul mit dem mindestens einen Einrastmodul zusammenwirkt und in diesem Einrastmodul in Anlage gerät. Ein Einschnappen, Eingreifen und/oder Einrasten des mindestens einen Verrastungsmoduls erfolgt weitgehend senkrecht zu einer Bewegung des Sensors innerhalb des Halteteils bzw. der Anordnung.

Falls eine Demontage des Sensors vorgesehen sein sollte, ist es weiterhin möglich, dass das Verrastungsmodul aus dem Einrastmodul auch wieder herausgleiten, herausschnappen und/oder sich "entrasten" kann.

Demnach kann in Ausgestaltung der Anordnung vorgesehen sein, dass das mindestens eine Verrastungsmodul und das mindestens eine Einrastmodul dazu ausgebildet sind, bei einer Bewegung des Sensors relativ zu dem Halteteil sowohl bei einer Montage als auch bei einer Demontage richtungsunabhängig, d. h. sowohl in Einbaurichtung als auch in Ausbaurichtung des Sensors aneinander zu gleiten und somit im letzterem Fall eine Freigabe des Sensors zu ermöglichen.

Ein Bereich, den das Halteteil umschließt, kann einen, abgesehen von den Montagemodulen, weitgehend runden Querschnitt aufweisen. Eine Außenwandung des Sensors kann einen, von dem mindestens einen Einrastmodul abgesehen, weitgehend runden Querschnitt aufweisen.

Die Erfindung betrifft auch ein Verfahren zur Montage und Demontage eines Sensors in einer Öffnung einer Vorrichtung. Dabei wird ein Halteteil in der Öffnung angeordnet und über mindestens zwei Montagemodule, die einen Abschnitt der Vorrichtung gemeinsam beaufschlagen, an der Vorrichtung arretiert. Der Sensor wird in dem arretierten Halteteil zumindest teilweise aufgenommen und über das Halteteil an der Vorrichtung befestigt, wobei mindestens ein Verrastungsmodul des Halteteils bei der Montage des Sensors entlang einer Außenwandung des Sensors gleitet und bewegt wird, bis das Verrastungsmodul mit einem Einrastmodul an der Außenwandung des Sensors in Eingriff gerät. Zur Demontage wird der Sensor aus dem Halteteil herausgenommen, wobei das mindestens eine erste Montagemodul den Abschnitt der Vorrichtung derart beaufschlagt, dass das Halteteil in der Öffnung verbleibt.

Die Montage des Sensors in der Öffnung der Vorrichtung kann unabhängig von der Demontage durchgeführt werden. Die Demontage kann als optionaler Verfahrensschritt nach erfolgter Montage durchgeführt werden. Dabei wird das Halteteil in der Öffnung angeordnet und über mindestens zwei Montagemodule des Halteteils, die den Abschnitt der Vorrichtung gemeinsam beaufschlagen, an der Vorrichtung arretiert. Weiterhin wird der Sensor in dem arretierten Halteteil zumindest teilweise aufgenommen und über das Halteteil an der Vorrichtung befestigt.

In einer Ausführungsform wird der Abschnitt der Vorrichtung zwischen den mindestens zwei Montagemodulen des selbstverriegelnden Halteteils angeordnet bzw. dazwischen eingeklemmt und/oder umgriffen.

Hierbei kann das mindestens eine erste Montagemodul beim Arretieren des Halteteils an der Vorrichtung relativ zu einem Grundkörper des Halteteils bewegt werden, wobei dieses mindestens eine erste Montagemodul an der Vorrichtung entlang gleiten kann.

Ferner ist denkbar, dass bei dem Verfahren eine Bewegung des selbstverriegelnden Halteteils in Einbaurichtung gestoppt wird, sobald der Abschnitt der Vorrichtung von mindestens einem zweiten, typischerweise starren, relativ zu dem Grundkörper nicht beweglichen Montagemodul des Halteteils beaufschlagt wird.

In einer Variante ist auch möglich, dass das erfindungsgemäße Halteteil in die Öffnung geschoben und nachfolgend der Sensor in das Halteteil geschoben wird. Zudem kann das Halteteil auch ausgehend von einer Seite der Vorrichtung in der Öffnung angeordnet werden und der Sensor ausgehend von derselben Seite in dem Halteteil angeordnet werden. Durch diese Maßnahme kann die gesamte Montage des Halteteils und des Sensors sowie eine bedarfsweise durchzuführende Demontage des Sensors ausgehend von einer Seite, in der Regel der Rückseite der Wandung und somit der Vorrichtung, ohne Werkzeug also nur von Hand durchgeführt werden. Somit ist es bspw. möglich, dass das Halteteil und der Sensor beide von einer Rückseite der Vorrichtung montiert werden.

Alternativ ist es möglich, das Halteteil und den Sensor von der Vorderseite der Vorrichtung zu montieren. In einer weiteren Variante ist es möglich, das Halteteil ausgehend von einer Seite, bspw. der Vorderseite, und den Sensor ausgehend von der anderen, entgegensetzten Seite, in diesem Fall der Rückseite, zu montieren. Außerdem kann es auch möglich sein, den Sensor ausgehend von einer beliebigen Seite, entweder ausgehend von der Vorderseite und/oder der Rückseite, und somit unabhängig davon, von welcher Seite zuvor das Halteteil montiert wird, zu montieren.

Hierbei ist auch möglich, dass mindestens ein Verrastungsmodul des Halteteils bei der Montage des Sensors entlang einer Außenwandung des Sensors gleitet und relativ zu einem Grundkörper des Halteteils flexibel oder elastisch bewegt wird und dabei mit einem Einrastmodul an der Außenwandung des Sensors in Eingriff geraten kann, um den Sensor in einer gegebenen Position halten zu können.

Bei der Demontage des bereits montierten Sensors wird der Sensor aus dem Halteteil herausgenommen, wobei das mindestens eine erste Montagemodul den Abschnitt der Vorrichtung derart beaufschlagt, dass das Halteteil in der Öffnung verbleibt.

Dabei kann die Demontage derart ausgeführt werden, dass das mindestens eine Verrastungsmodul des selbstverriegelnden Halteteils beim Herausnehmen des Sensors aus dem Halteteil aus dem Einrastmodul freigegeben wird und entlang der Außenwandung des Sensors gleitet und relativ zu dem Grundkörper des Halteteils bewegt wird.

Die Demontage des Sensors kann in Ausgestaltung dadurch begünstigt werden, dass der Sensor ein in Richtung der Seite, von der aus die Demontage erfolgt, bspw. als Zunge, Öse, Eingrifföffnung oder dergleichen ausgebildetes Halteelement als Angriffspunkt aufweist, über das der Sensor aus seiner Position innerhalb des Halteteils wieder herausgezogen und somit entfernt werden kann. Es ist auch möglich, den Sensor aus dem Halteteil herauszuschieben. Die Demontage des Sensors kann ausgehend von derselben Seite und/oder ausgehend von der entgegengesetzten Seite wie die Montage erfolgen. Somit sind auch Ausgestaltungen denkbar, wonach der Sensor ausgehend von einer beliebigen Seite montiert und ausgehend von einer beliebigen Seite demontiert werden kann.

Es ist vorgesehen, dass mit dem erfindungsgemäßen Halteteil und/oder der erfindungsgemäßen Anordnung, einzelne oder sämtliche Schritte des Verfahrens zur Montage und zur Demontage des Sensors durchführbar sind. Einzelne Funktionen des Halteteils und/oder der Anordnung sind als weitere Schritte der Verfahren realisierbar. Entsprechend können funktionelle Eigenschaften des Halteteils und/oder der Anordnung als Schritte zumindest eines der beiden Verfahren realisiert sein.

Mit dem Verfahren ist es möglich, den Sensor über das Halteteil an einer Vorrichtung und insbesondere an einem flachen Bereich wie beispielsweise einer Wandung der Vorrichtung anzubringen bzw. anzuordnen und dabei zu befestigen. Die Montage kann dabei für berührungslose Sensoren durchgeführt werden, wobei ein Querschnitt eines derartigen Sensors bzw. ein Querschnitt einer Außenwandung eines derartigen Sensors beliebig geformt sein kann. In der Regel ist die Außenwandung des Sensors rund oder mehreckig, beispielsweise viereckig.

Mit dem Halteteil als Hilfsmittel zur Montage des Sensors kann dieser platzsparend befestigt werden. Somit ist auch eine Montage kleinbauender Sensoren, die bspw. nur eine Größe eines Centstücks aufweisen, möglich.

Es ist vorgesehen, dass das Halteteil in einer Öffnung einer in der Regel flachen Wandung der Vorrichtung angeordnet und dabei arretiert wird. Zur Montage wird der Sensor in das bereits aufgrund seiner Ausbildung mit Montagemodulen selbsttätig arretierte Halteteil hineingeschoben oder hineingedrückt, so dass der Sensor über das Halteteil mittelbar in der Öffnung und dabei üblicherweise an der Wandung der Vorrichtung zu montieren und somit zu befestigen ist.

In Ausgestaltung ist vorgesehen, dass eine Montage des selbstverriegelnden Halteteils an der Wandung ohne Werkzeuge und ohne Zuhilfenahme von Befestigungsmitteln durchgeführt werden kann. Alternativ oder ergänzend kann auch die Demontage des Sensors ohne Werkzeuge durchgeführt werden, da das an der Vorrichtung bzw. der Wand arretierte Halteteil bei einer endgültigen Montage des Sensors, bei der der Sensor in das Halteteil hineingeschoben wird, die dabei entstehenden gerichteten Kräfte über die ersten und zweiten Montagemodule durch gemeinsames Zusammenwirken dieser Montagemodule kompensiert, ohne den Halt in der Öffnung und demnach an der Wandung zu verlieren.

Zum Entfernen eines bereits montierten oder befestigten Sensors ist in weiterer Ausgestaltung des Verfahrens die Demontage vorgesehen, die ebenfalls ohne Zuhilfenahme von Werkzeug erfolgen kann. Auch in dieser Variante des Verfahrens kann das Halteteil die beim Herausschieben oder Herausdrücken des Sensors entstehenden Kräfte ebenfalls über die Montagemodule kompensieren.

Das Halteteil ist demnach selbstarretierend ausgebildet. Somit ist es möglich, dieses Halteteil insbesondere an einer von außen zugänglichen Rück- oder Vorderseite der Wandung in einer Öffnung oder einem Loch dieser Wandung einzuklipsen, wobei ein Abschnitt der Vorrichtung, typischerweise ein an die Öffnung angrenzender Randbereich der Wandung, an mindestens einer Stelle zwischen den mindestens zwei Montagemodulen eingeklemmt wird. Sobald das Halteteil in der Öffnung angeordnet und somit eingeklipst bzw. arretiert ist, kann der Sensor durch Einführen des Sensors in das Halteteil montiert und nach erfolgter Montage auch wieder demontiert werden. Im montierten bzw. befestigten Zustand ist der Sensor über das Halteteil an der Wandung der Vorrichtung, innerhalb der Öffnung der Wandung sicher positioniert.

Die zur sicheren Positionierung des Sensors erforderlichen Kräfte können durch geeignete Ausgestaltung der als Verrastungsmodule ausgebildeten Module des Halteteils bereitgestellt werden. Dabei wirkt das mindestens eine Verrastungsmodul mit mindestens einem Einrastmodul an der Außenwandung des Sensors zusammen. Durch eine Ausbildung der miteinander zusammenwirkenden Verrastungsmodule und Einrastmodule können Kräfte derart eingestellt werden, dass der Sensor zumindest bei einem herkömmlichen Betrieb der Vorrichtung, wobei sich bspw. eine als Maschine ausgebildete Vorrichtung üblicherweise bewegt oder vibriert, gesichert ist.

Dies wird einerseits durch die Flexibilität und somit relative Beweglichkeit des mindestens einen Verrastungsmoduls des üblicherweise aus Kunststoff, bspw. einem glasfaserverstärkten Kunststoff, gebildeten Halteteils erreicht. Hierzu ist bspw. ein geeignetes elastisch verformbares Material zu wählen und/oder eine Verbindung des mindestens einen Verrastungsmoduls zu dem Grundkörper des Halteteils geeignet dick oder dünn und somit hinreichend federnd auszubilden. Die bei der Montage und/oder Demontage auftretenden und zu kompensierenden Kräfte können auch durch geeignete Formung der in der Regel im Profil keilförmig ausgebildeten Verrastungsmodule oder Einrastmodule beeinflusst werden.

Das mindestens eine erste Montagemodul, das dazu vorgesehen ist, nach erfolgter Montage an der Wandung von innen und demnach an einer Rückseite anzuliegen, kann in einer möglichen Ausgestaltung auch einen treppenförmig ausgebildeten breiten Wirkbereich, der eine Anzahl zueinander versetzter Stufenelemente umfasst, aufweisen. Somit kann in Abhängigkeit einer Breite des Abschnitts oder Randbereichs und somit in Abhängigkeit einer Wandstärke der Wandung, jenes Stufenelement des breiten Wirkbereichs an dem Abschnitt anliegen, das durch Zusammenwirken mit dem zweiten Montagemodul ein bestmögliches Einklemmen des Abschnitts der Wandung ermöglicht. Dadurch ist das Halteteil zur Arretierung in Vorrichtungen mit unterschiedlichen Wandstärken geeignet. Beim Einbau und somit einem Einführen des Halteteils in die Öffnung wirken die Stufenelemente des treppenförmigen breiten Wirkbereichs mit dem Abschnitt der Vorrichtung, in der Regel dem Randbereich, zusammen. Dabei gerät jeweils ein Stufenelement nach dem anderen an dem Abschnitt in Anlage, so dass der treppenförmige breite Wirkbereich Stufenelement für Stufenelement schrittförmig an dem Abschnitt entlangrastet. Sobald das zweite Montagemodul an der Vorderseite des Abschnitts in Anlage gerät, wird die beschriebene Bewegung des treppenförmigen breiten Wirkbereichs und somit des ersten Montagemoduls gestoppt. In diesem Augenblick gerät jenes Stufenelement an dem Abschnitt an der Rückseite in Anlage, dessen Abstand zu dem zweiten Montagemodul des Halteteils, üblicherweise einer Breite des Abschnitts und somit der Wandstärke, entspricht. Somit ist der Abschnitt zwischen dem zweiten Montagemodul und besagtem Stufenelement angeordnet bzw. eingeklemmt. Somit können unterschiedlich dicke Abschnitte oder Wandbereiche von den Montagemodulen eingeklemmt und somit beaufschlagt werden.

Alternativ oder ergänzend kann auch an einer Außenwandung des Sensors mindestens ein flexibles, relativ zu der Außenwandung bewegliches Verrastungsmodul vorgesehen sein. Entsprechend kann an einer Innenseite des Grundkörpers des Halteteils ein Einrastmodul vorgesehen sein, so dass ein an der Außenwandung beweglich angeordnetes Verrastungsmodul des Sensors in ein Einrastmodul an dem Grundkörper eingreifen kann.

Weiterhin kann der Sensor ein Sensorgehäuse aufweisen, wobei die Außenwandung des Sensorgehäuses regelmäßig die Einrastmodule aufweist. Die eigentlichen elektronischen Komponenten des Sensors, die eine Bestimmung einer physikalischen und/oder chemischen Größe ermöglichen, können innerhalb dieses Sensorgehäuses angeordnet oder befestigt sein.

Die einzelnen Komponenten der Anordnung, die zur Befestigung des Sensors miteinander zusammenwirken, d. h. das mindestens eine als Verrastungsmodul ausgebildete Modul des Halteteils, die Einrastmodule an der Außenwandung des Sensorgehäuses sowie die mindestens zwei mit der Wandung der Vorrichtung zusammenwirkenden Montagemodule stellen auch bei Auftreten äußerer ungerichteter Kräfte oder Vibrationen eine Sicherung des Sensors gegen ein Entfernen dieses Sensors aus der Wandung bereit. Demnach ist die Anordnung bzw. eine Sensorbefestigung als selbstarretierende, blockierende Einrichtung ausgebildet.

Über die Sensorbefestigung ist eine sichere Halterung, Anordnung oder Befestigung des Sensors in und/oder an einem flachen, ebenen Bereich, der in der Regel flachen Wandung der Vorrichtung bzw. eines Halters bei Normalbetrieb möglich. Die Montage zur Bereitstellung der Sensorbefestigung erfolgt in Ausgestaltung ohne Werkzeug.

Sensoren, beispielsweise induktive Umgebungssensoren, fotoelektrische Schalter und dergleichen, die bislang mit Schrauben oder Schraubenmuttern an Vorrichtungen befestigt werden, können mit dem Halteteil nun wesentlich einfacher montiert werden. Derartige Sensoren sind typischerweise zur Erfassung elektromagnetischer Wellen bzw. Strahlen oder von elektrostatischen oder magnetostatischen Feldern ausgebildet. Diese Sensoren können in allen Vorrichtungen zum Einsatz kommen, in denen besagte physikalische Größen zu erfassen sind. Dabei kann es sich um industrielle, gewerbliche, landwirtschaftliche oder privat genutzte Vorrichtungen bzw. Einrichtungen handeln, die beweglich, bspw. als Fahrzeuge, oder unbeweglich ausgebildet sein können. So sind bspw. auch Anwendungen in Müllfahrzeugen, Druckereieinrichtungen, Baggern oder Anlagen zur Lebensmittelverarbeitung, insbesondere zum Verpacken von Lebensmitteln, denkbar. Ein Weiterleiten von Daten oder Signalen zu erfaßten Größen kann drahtgebunden, bspw. über ein Kabel, oder drahtlos durch Funkübertragung erfolgen.

Mit dem Verfahren ist unter anderem auch vorgesehen, das Halteteil in dem üblicherweise flachen Bereich der Vorrichtung zu befestigen, wobei das Halteteil in die Öffnung des Bereichs der Vorrichtung eingestöpselt bzw. eingesteckt wird und mit moderater, geeigneter Kraft beispielsweise über Verklipsung oder Verrastung durch geeignete Materialwahl und Formung der Montagemodule befestigt wird. So ist das Halteteil gegen ein Herausdrücken aus der Öffnung oder dem Loch, beispielsweise in einem Gehäuse der Vorrichtung oder in einer Platte, und somit gegen ein Herunterfallen gesichert.

In einem derartigen vormontierten bzw. montierten Zustand ist das Halteteil derart gesichert, dass weiterhin die Montage und Befestigung des berührungslosen Sensors möglich ist. Bei einer Montage des Sensors kann auch eine zusätzliche Befestigung des Halteteils realisiert werden, so dass beispielsweise eine Verklipsung oder Verrastung durch Beaufschlagung eines Montagemoduls durch die Außenwandung des Sensors gegenüber der Öffnung oder dem Abschnitt der Vorrichtung weiter gesichert wird, so dass ein unbeabsichtigtes Lösen des gesamten Halteteils zusätzlich verhindert wird. Hierzu kann u. a. vorgesehen sein, dass die Außenwandung des Sensors das flexibel bewegliche erste Montagemodul an oder gegen den Abschnitt der Wandung bzw. den Randbereich der Öffnung drückt.

Weiterhin weist das Halteteil in Ausgestaltung Verrastungsmodule bzw. Verklipsungsmodule auf, über die eine Befestigung des Sensors an dem Halteteil und somit auch an dem Bereich der Vorrichtung durch Zusammenwirken dieser Verrastungsmodule mit Einrastmodulen an der Außenwandung des Sensors möglich ist. Diese Verrastungsmodule sind derart ausgebildet oder geformt, dass über sie eine Befestigung oder Fixierung des Sensors gegenüber Scherkräften, Drehmomenten oder Drücken, die entlang einer Zylinderachse des Sensors nach erfolgter Montage weiterhin in Einbaurichtung drücken und somit wirken, gesichert ist. Eine Sicherung gegen ein Verdrehen des Sensors kann durch geeignete umlaufende Positionierung der Einrastmodule an der Außenwandung des Sensors und entsprechende Anordnung der damit zusammenwirkenden Verrastungsmodule an dem Grundkörper des Halteteils erreicht werden. Mit dieser Maßnahme kann weiterhin eine Vorzugsrichtung des Sensors, über die eine Orientierung oder Ausrichtung in Richtung eines zu überwachenden Bereichs vorgesehen ist, verdrehsicher eingehalten werden. Insgesamt ist der Sensor gegen ein unbeabsichtigtes Entfernen gesichert. Durch Aufbringen einer angemessenen, geeigneten Kraft entlang der Achse des Sensors ist ein Lösen des Sensors aus seiner über das Halteteil bereitgestellten Befestigung ohne Werkzeug möglich, wobei ein derartiges Lösen üblicherweise entgegen der Einbaurichtung entlang der Zylinderachse des Sensors vorzunehmen ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Figur 1 zeigt in schematischer Schnittdarstellung eine erste Ausführungsform eines Halteteils.

Figur 2 zeigt in schematischer Schnittdarstellung das Halteteil aus Figur 1 in einem in einer Öffnung einer Wandung arretierten Zustand.

Figur 3 zeigt in schematischer Schnittdarstellung einen ersten Schritt einer Montage einer ersten Ausführungsform eines Sensors in der in Figur 2 dargestellten Anordnung.

Figur 4 zeigt in schematischer Schnittdarstellung den Sensor aus Figur 3 in einem montierten Zustand.

Figur 5 zeigt in schematischer Schnittdarstellung eine Demontage des Sensors aus Figur 3 oder 4.

Figur 6 zeigt in schematischer Schnittdarstellung eine zweite Ausführungsform eines Halteteils.

Figur 7 zeigt in schematischer Schnittdarstellung das Halteteil aus Figur 6 in einem in einer Öffnung einer Wandung arretierten Zustand.

Figur 8 zeigt in schematischer Schnittdarstellung einen ersten Schritt einer Montage einer zweiten Ausführungsform eines Sensors in der in Figur 7 dargestellten Anordnung.

Figur 9 zeigt in schematischer Schnittdarstellung den Sensor aus Figur 8 in einem montierten Zustand.

Figur 10 zeigt in schematischer Schnittdarstellung eine Demontage des Sensors aus Figur 8 oder 9.

Die Erfindung ist anhand von Ausführungsbeispielen in der Zeichnung schematisch dargestellt und wird im folgenden unter Bezugnahme auf die Zeichnung ausführlich beschrieben.

Die Figuren werden zusammenhängend und übergreifend beschrieben; gleiche Bezugszeichen bezeichnen gleiche Bauteile.

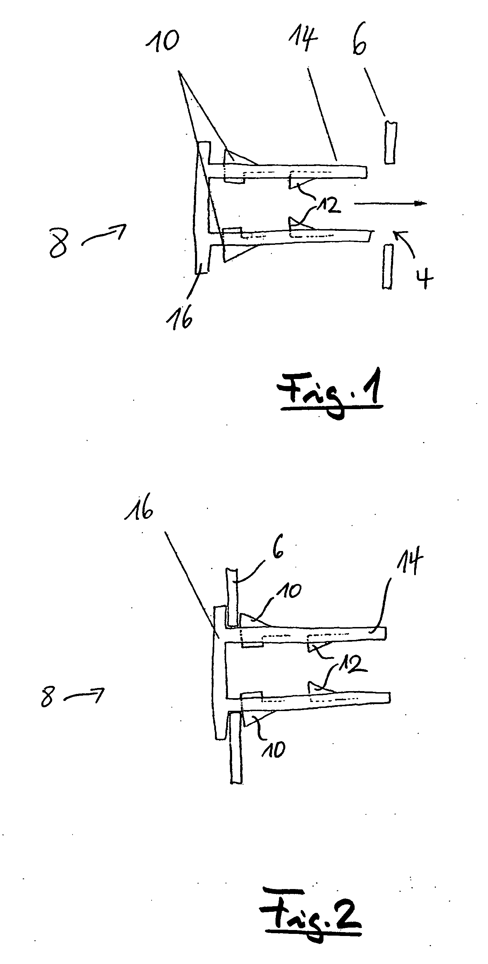

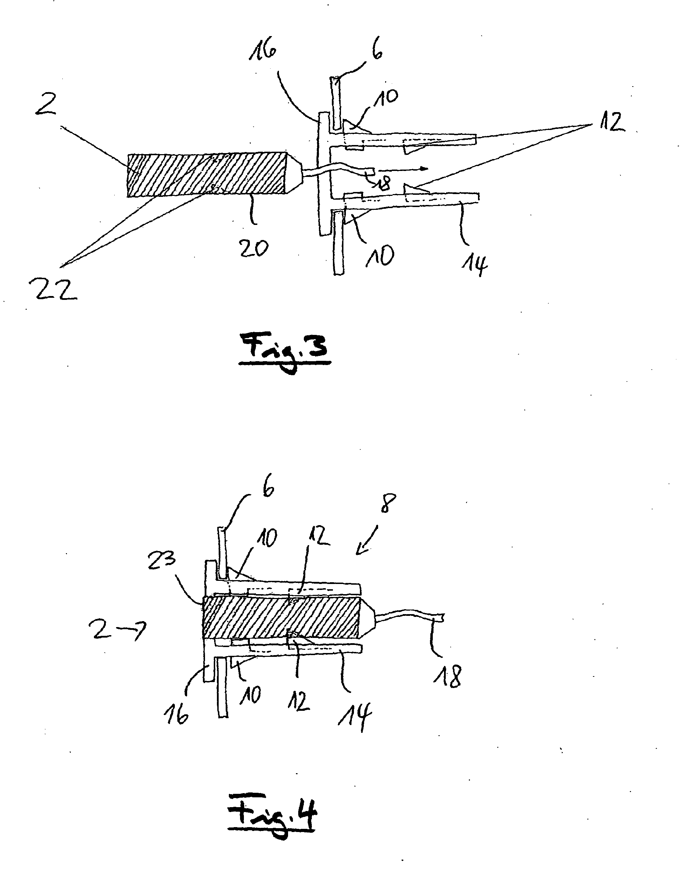

Anhand der Figuren 1 bis 5 ist eine erste Ausführungsform einer erfindungsgemäßen Anordnung zur Montage eines erstmals in Figur 3 gezeigten Sensors 2 in einer Öffnung 4 einer Wandung 6 und somit einer Vorrichtung schematisch gezeigt. Die Anordnung umfasst ein Halteteil 8 mit hier zwei ersten Montagemodulen 10 sowie zwei Verrastungsmodulen 12, wobei diese Montagemodule 10 und Verrastungsmodule 12 relativ zu einem Grundkörper 14 des Halteteils 8 elastisch beweglich sind.

Es ist vorgesehen, dass der Grundkörper 14 mit den ersten Montagemodulen 10 und den Verrastungsmodulen 12 einen zylinderförmigen Bereich umschließt. Außerdem weist das Halteteil 8 als ein zweites Montagemodul 16 einen umlaufenden Kragen auf, dessen Außendurchmesser größer als ein Außendurchmesser des Grundkörpers 14 sowie der Öffnung 4 ist. Von den ersten Montagemodulen 10 und den Verrastungsmodulen 12 abgesehen entspricht ein Durchmesser des hier zylindrischen Grundkörpers 14 in etwa einem Durchmesser der im Querschnitt runden Öffnung 4, so dass der Grundkörper 14 des Halteteils in die Öffnung 4 hineinpasst. Die ersten Montagemodule 10 sowie die Verrastungsmodule 12 sind in einer axialen Richtung des Halteteils 8 zueinander versetzt angeordnet.

Ein erster Schritt einer ersten Ausführungsform eines Verfahrens zur Montage des Sensors 2 ist in Figur 1 schematisch dargestellt. Hierbei ist vorgesehen, dass das Halteteil 8 in Richtung des Pfeils von einer Vorderseite in die Öffnung 4 der Wandung 6 geschoben wird.

Beim Einschieben des Halteteils 8 in die Öffnung 4 ist vorgesehen, dass die hier im Profil keilförmig ausgebildeten ersten Montagemodule 10 relativ zu dem Grundkörper 14 des Halteteils 8 nach innen zurückschnappen, wenn diese einen Abschnitt der Wandung und somit einen Randbereich der Öffnung 4 berühren, da Wirkbereiche dieser ersten Montagemodule 10 einen Abstand zu einer Zentralachse des Halteteils 8 aufweisen, der größer als ein Radius der Öffnung 4 ist.

Figur 2 zeigt das Halteteil 8 in einem arretierten Zustand innerhalb der Öffnung 4 der Wandung 6. In Figur 2 ist weiterhin darstellt, dass die ersten Montagemodule 10 relativ zu dem Grundkörper 14 dieselben Positionen wie in Figur 1 aufweisen, so dass die ersten Montagemodule 10 nach erfolgtem Einschieben des Halteteils 8 in die Öffnung 4, auf einer Rückseite der Wandung 6 wieder zurückgeschnappt sind. Aus Figur 2 geht weiterhin hervor, dass ein Bereich der Wandung 6, der unmittelbar an die Öffnung 4 anschließt bzw. diese umrandet, zwischen dem umlaufenden Kragen und somit dem zweiten starren Montagemodul 16 an der Vorderseite und den ersten Montagemodulen 10 an der Rückseite eingeklemmt ist, so dass eine Arretierung des Halteteils 8 innerhalb der Öffnung 4 der Wandung 6 erfolgt. Demnach ist das in dieser Ausführungsform vorgestellte Halteteil 8 selbstverriegelnd bzw. selbstarretierend ausgebildet.

Figur 3 zeigt in schematischer Darstellung einen weiteren Schritt der ersten Ausführungsform des erfindungsgemäßen Verfahrens, bei dem der im Querschnitt zylinderförmige Sensor 2 in Richtung des Pfeils von der Vorderseite in das Halteteil 8 eingeschoben wird. Die hier gezeigte Ausführungsform des Sensors 2 umfasst an einem der Öffnung 4 zugewandten Ende ein Kabel 18 für einen elektrischen Anschluss. Eine Außenwandung 20 des Sensors 2 weist zwei als Ausnehmungen ausgebildete hier durch gestrichelte Linien kenntlich gemachte Einrastmodule 22 auf. In der vorliegenden Ausführungsform ist die Außenwandung 20 des Sensors 2, von den beiden Einrastmodulen 22 abgesehen, weitgehend zylindrisch ausgebildet.

Die Verrastungsmodule 12 sind keilförmig ausgebildet, wobei in Einschubrichtung des Halteteils 8 und somit auch in Einschubrichtung des Sensors 2 ein spitzer Wirkbereich der Verrastungsmodule 12 nach vorne d. h. in Einschubrichtung orientiert ist.

Figur 4 zeigt in schematischer Darstellung den Sensor 2 innerhalb der Halteeinrichtung 8 und somit auch innerhalb der Öffnung 4 der Wandung 6. Dabei greifen die keilförmigen Verrastungsmodule 12 des Halteteils 8 in der Regel passgenau in die ebenfalls keilförmig ausgebildeten Einrastmodule 22 an der Außenwandung 20 des Sensors 2.

Es ist vorgesehen, dass die Verrastungsmodule 12 bei einem Einführen des Sensors 2 in das Halteteil 8 relativ zu dem Grundkörper 14 des Halteteils nach außen d. h. in Richtung des Grundkörpers 14 schnappen. Sobald der Sensor 2 jedoch die in Figur 4 gezeigte Position innerhalb des Halteteils 8 erreicht hat, sind die Verrastungsmodule 12 wieder zurückgeschnappt und unter Bereitstellung einer Zusammenwirkung mit den Einrastmodulen 22 an der Außenwandung 20 des Sensors 2 innerhalb dieser Einrastmodule 22 vollständig und passförmig aufgenommen.

Dadurch, dass das als Kragen ausgebildete zweite Montagemodul 16 an einer Vorderseite eines Abschnitts der Wandung 6 und somit an einem Randbereich der Öffnung 4 anliegt, wird eine Position des Halteteils 8 beim Einschieben des Sensors 2 nicht verändert.

Eine Ausrichtung des Sensors 2 relativ zu der Wandung 6 der Vorrichtung wird über die Anordnung der Einrastmodule 22 entlang der Außenwandung 20 des Sensors 2 festgelegt. Weiterhin ist vorgesehen, dass die Außenwandung 20 des Sensors 2 gegen einen inneren Wirkbereich der ersten Montagemodule 10 drückt und somit diese ersten Montagemodule 10 nach außen drückt, so dass durch Zusammenwirken der Außenwandung 20 mit den ersten Montagemodulen 10 eine Befestigung des Halteteils 8 an der Wandung 6 verstärkt wird.

Weiterhin ist in Figur 4 dargestellt, dass eine Vorderkante 23 des Sensors 2 mit einer Außenseite des zweiten Montagemoduls 16 bündig abschließt. Durch diese Anordnung kann durch den Sensor 2 an der Vorderseite ein größtmöglicher Bereich unter Nutzung eines größtmöglichen Öffnungswinkels überwacht werden.

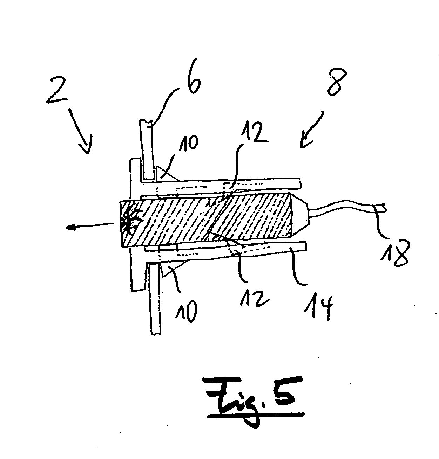

Figur 5 zeigt einen weiteren Schritt der hier gezeigten ersten Ausführungsform des erfindungsgemäßen Verfahrens, bei dem der Sensor 2 aus dem Halteteil 8 entfernt und somit demontiert wird. Aufgrund der gleichsinnigen Orientierung der keilförmigen Profile der Verrastungsmodule 12 des Halteteils 8 und der Einrastmodule 22 an der Außenwandung 20 des Sensors 2, wie insbesondere in Figur 4 gezeigt, können die Verrastungsmodule 12 bei einem Herausziehen des Sensors 2, das hier in Richtung des Pfeils zu der Vorderseite erfolgt, relativ zu dem Grundkörper 14 des Halteteils 8 zurückschnappen, so dass der Sensor 2 nunmehr frei beweglich entfernt werden kann.

Das selbstverriegelte bzw. selbstarretierte Halteteil 8 wird bei der Demontage des in diesem Fall bspw. beschädigten Sensors 2 nicht bewegt, da es durch das als Kragen ausgebildete zweite Montagemodul 16 sowie die ersten Montagemodule 10 unter Bereitstellung eines mechanischen Widerstands an der Wandung 6 und somit der Vorrichtung auch entgegen einer Bewegung des Sensors 2 bei dessen Demontage arretiert bleibt. Hierbei wird der Abschnitt der Wandung 6 der Vorrichtung und somit ein entsprechender Randbereich der Öffnung 4 durch beidseitiges Zusammenwirken der ersten und zweiten Montagemodule 10, 16 von der Vorder- und der Rückseite beaufschlagt.

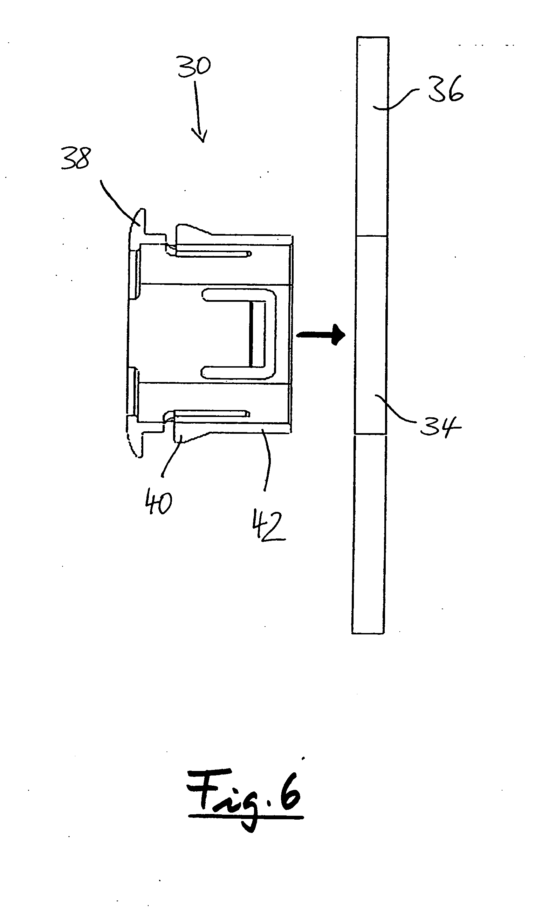

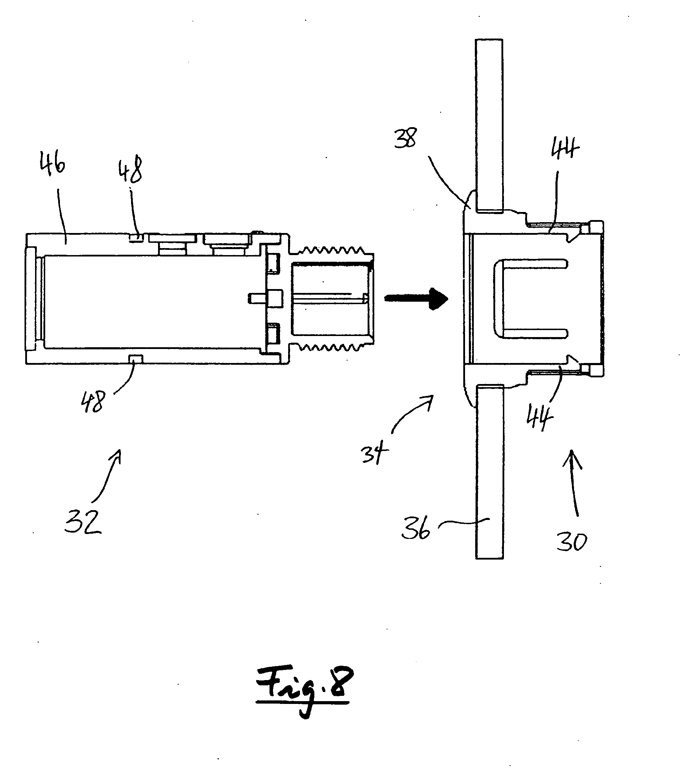

In den Figuren 6 bis 10 ist in schematischer Schnittdarstellung eine zweite Ausführungsform eines Halteteils 30 gezeigt, mit dem ein erstmals in Figur 8 in schematischer Schnittdarstellung gezeigter Sensor 32 in einer Öffnung 34 einer Wandung 36 einer Vorrichtung zu montieren und somit zu befestigen ist. Dabei sind einzelne Schritte eines Verfahrens zur Montage sowie Demontage des Sensor 32 in der Öffnung 34 der Wandung 36 in den einzelnen Figuren 6 bis 10 in zeitlicher Abfolge dargestellt.

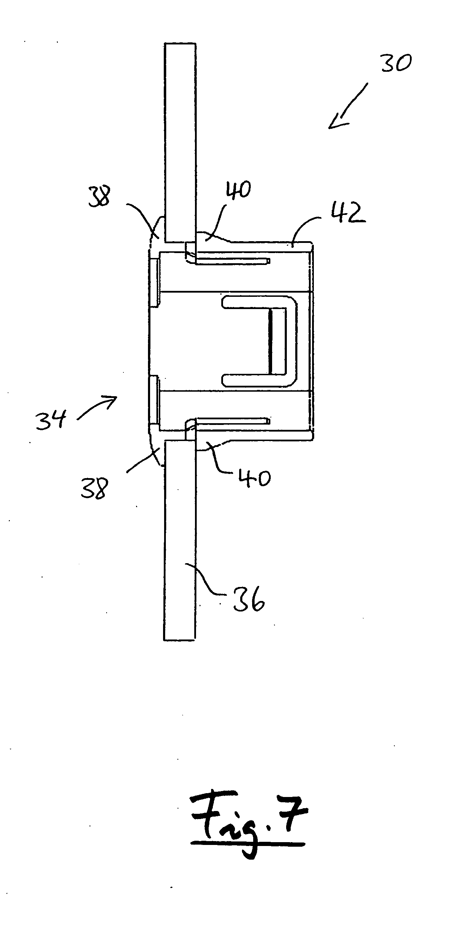

Dabei sind in den Figuren 6 und 7 zwei erste Montagemodule 40 sowie ein als Kragen ausgebildetes zweites Montagemodul 38 des Halteteils 30 dargestellt.

Figur 6 zeigt einen ersten Schritt der hier beschriebenen zweiten Ausführungsform des Verfahrens, bei dem das Halteteil 30 in Richtung des Pfeils von einer Vorderseite in die Öffnung 34 eingeschoben wird.

Figur 7 zeigt das vollständig in die Öffnung 34 eingeschobene Halteteil 30 in einem an der Wandung 36 arretierten Zustand. Eine Arretierung des Halteteils 30 erfolgt dadurch, dass ein Abschnitt der Wandung 36 und somit ein Randbereich der Öffnung 34 zwischen den zweiten Montagemodulen 40 auf der Rückseite und dem ersten Montagemodul 38 auf der Vorderseite angeordnet und somit eingeklemmt ist.

Zum Einführen bzw. Einschieben des Halteteils 30 in die Öffnung 34 ist vorgesehen, dass sich die ersten Montagemodule 40 relativ zu einem Grundkörper 42 des Halteteils bewegen, so dass die beiden ersten Montagemodule 40 beim Einschieben des Halteteils 30, wenn spitze Wirkbereiche der ersten Montagemodule 40 den Abschnitt der Wandung 36 berühren, kurzzeitig in eine Richtung einer Hauptachse des Halteteils 30 einschnappen und nach Überwinden des Abschnitts der Wandung 36 auf der Rückseite wieder in eine ursprüngliche, wie in den Figuren 6 und 7 gezeigte Position zurückschnappen. Somit ergibt sich, dass nach erfolgter Montage die breiten Wirkbereiche der ersten Montagemodule 40 an dem Abschnitt der Wandung 36 anliegen. Das in vorliegender Ausführungsform beschriebene Halteteil 30 ist selbstverriegelnd bzw. selbstarretierend ausgebildet.

Die in den Figuren 8 bis 10 gezeigten schematischen Schnittdarstellungen des Halteteils 30 zeigen dieses Halteteil 30 im Vergleich zu den in den Figuren 6 und 7 gezeigten Schnittdarstellungen in einer leicht gedrehten Perspektive, so dass statt der ersten Montagemodule 40 nunmehr die Verrastungsmodule 44, die hier ebenfalls als Module vorgesehen sind, erkennbar sind. Demnach sind die ersten Montagemodule 40 und die Verrastungsmodule 44 an dem Grundkörper 42 unter verschiedenen Winkeln zueinander versetzt angeordnet.

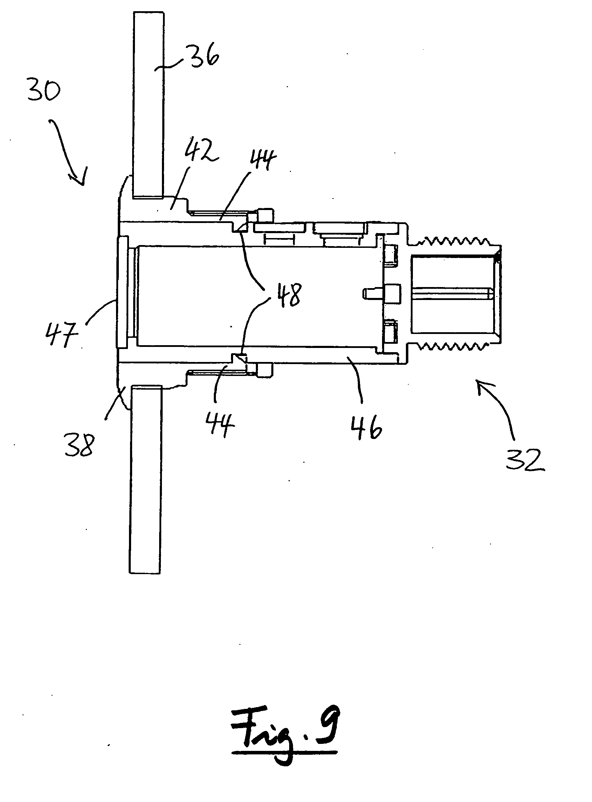

Im einzelnen ist in Figur 8 gezeigt, wie die zweite Ausführungsform des Sensors 32, der an einer Außenwandung 46 Einrastmodule 48 aufweist, in Richtung des Pfeils von der Vorderseite in die Öffnung 34 eingeschoben wird. In Figur 9 ist der in das Halteteil 30 vollständig eingeschobene Sensor 32 über das Halteteil 30 an der Wandung 36 montiert und somit befestigt.

Dabei zeigt Figur 9 weiterhin, wie die Verrastungsmodule 44 in die als im Querschnitt viereckige Ausnehmungen ausgebildeten Einrastmodule 48 an der Außenwandung 46 des Sensors 32 eingerastet sind. Hierzu ist während der Montage vorgesehen, dass die Verrastungsmodule 44 des Halteteils 30 sich während des Einschiebens des Sensors 30 relativ zu dem Grundkörper 42 des Halteteils 30 flexibel nach außen bewegen und dabei entlang der Außenwandung 46 des Sensors 32 gleiten. Sobald der Sensor 32, wie in Figur 9 gezeigt, vollständig in das Halteteil 30 eingeschoben ist, schnappen die keilförmigen Wirkbereiche der Verrastungsmodule 44 in die Einrastmodule 48 an der Außenwandung 46 des Sensors 32 ein, so dass der Sensor 32 an dem Halteteil 30 und somit über das Halteteil 30 an der Wandung 36 befestigt ist.

Auch in dieser Ausführungsform schließt eine Vorderkante 47 des Sensors 32 im montierten Zustand mit dem als Kragen ausgebildeten zweiten Montagemodul 38 des Halteteils 30 bündig ab, so dass durch den Sensor 32 an der Vorderseite ein Bereich unter einem größtmöglichen Öffnungswinkel überwacht werden kann.

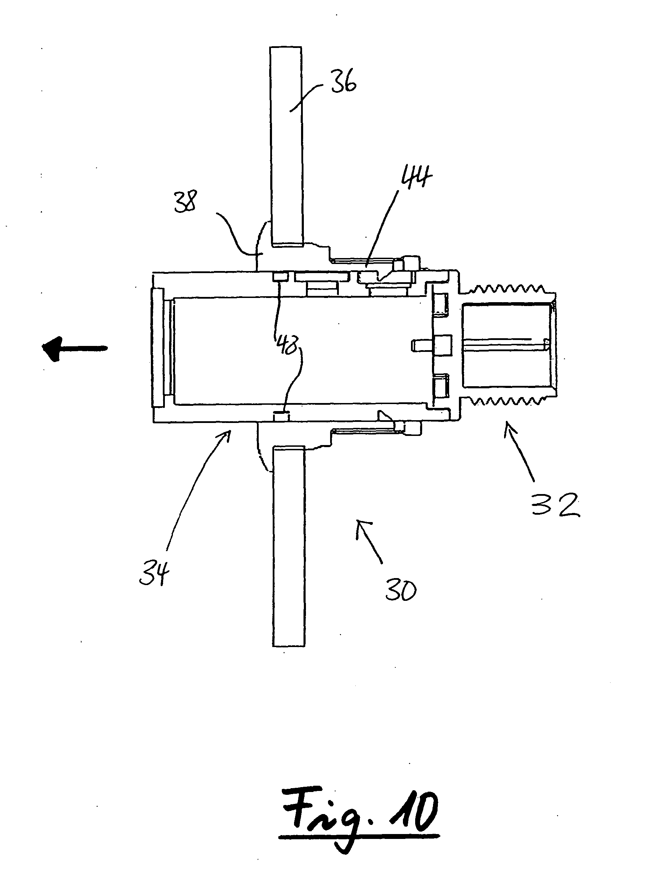

Figur 10 zeigt eine Demontage des Sensors 32, wobei dieser aus dem Halteteil 30 in Richtung des Pfeils zu der Vorderseite herausgezogen wird. Da spitze Wirkbereiche der keilförmigen Verrastungsmodule 44 des Halteteils 30 entgegen einer Richtung, in der der Sensor 32 aus dem Halteteil 30 herausgezogen wird, orientiert sind, können diese leicht aus den Einrastmodulen 40 an der Außenwandung des Sensors herausgleiten. Beim Herausziehen des Sensors 32 bleibt das Halteteil 30 an der Wandung 36 arretiert, da Abschnitte der Wandung 36, wie insbesondere Figur 7 zeigt, nach wie vor zwischen den ersten Montagemodulen 40 an der Rückseite und dem als Kragen ausgebildeten zweiten Montagemodul 38 an der Vorderseite angeordnet und somit eingeklemmt sind.

## Patentansprüche

1. Halteteil zur Montage eines Sensors (2, 32) in einer Öffnung (4, 34) einer Vorrichtung, das mindestens zwei Montagemodule (10, 16, 38, 40) aufweist, die dazu ausgebildet sind, einen Abschnitt der Vorrichtung gemeinsam derart zu beaufschlagen, dass das Halteteil (8, 30) nach erfolgtem Einsetzen in der Öffnung (4, 34) an der Vorrichtung arretiert ist, und das mindestens ein Verrastungsmodul (12, 44) aufweist, das dazu ausgebildet ist, mit einer Außenwandung (20, 46) des Sensors (2, 32) zusammenzuwirken, so dass der Sensor (2, 32) über das Halteteil (8, 30) an der Vorrichtung zu montieren ist, wobei der Sensor (2, 32) zur Demontage aus dem Halteteil (8, 30) herauszunehmen ist, wobei mindestens ein erstes Montagemodul (10, 40) den Abschnitt der Vorrichtung derart beaufschlagt, dass das Halteteil (8, 30) in der Öffnung (4, 34) verbleibt, **dadurch gekennzeichnet, dass** das mindestens eine Verrastungsmodul (12, 44) keilförmig ist und dazu ausgebildet ist, mit mindestens einem als Ausnehmung ausgebildeten Einrastmodul (22, 48) an einer Außenwandung (20, 46) des Sensors (2, 32) zusammenzuwirken.

2. Halteteil nach Anspruch 1, das selbstverriegelnd ausgebildet ist.

3. Halteteil nach Anspruch 1 oder 2, bei dem die mindestens zwei Montagemodule (10, 16, 38, 40) derart angeordnet sind, dass der Abschnitt der Vorrichtung zwischen den mindestens zwei Montagemodulen (10, 16, 38, 40) anzuordnen ist.

4. Halteteil nach Anspruch 1, 2 oder 3, bei dem das mindestens eine erste Montagemodul (10, 40) als Teil eines Grundkörpers (14, 42) des Halteteils (8, 30) relativ zu diesem Grundkörper (14, 42) flexibel beweglich und weiterhin dazu ausgebildet ist, bei der Montage an der Vorrichtung entlang zu gleiten.

5. Halteteil nach Anspruch 4, bei dem das mindestens eine erste Montagemodul (10, 40) keilförmig ausgebildet ist, wobei ein spitzer Wirkbereich des mindestens einen ersten Montagemoduls (10, 40) in Einbaurichtung, in der das Halte teil (8, 30) beim Einsetzen in die Öffnung (4, 34) zu bewegen ist, orientiert ist, und wobei ein breiter Wirkbereich des mindestens einen ersten Montagemoduls (10, 40) entgegen dieser Einbaurichtung orientiert und weiterhin dazu ausgebildet ist, bei einer Bewegung des Halteteils (8, 30) entgegen der Einbaurirhtllng gegen den Abschnitt der Vorrichtung zu drücken.

6. Halteteil nach einem der voranstehenden Ansprüche, bei dem mindestens ein zweites Montagemodul (16, 38) an dem Halteteil (8, 30) starr ausgebildet und weiterhin dazu ausgebildet ist, in einem montierten Zustand an dem Abschnitt der Vorrichtung anzuliegen.

7. Halteteil nach einem der voranstehenden Ansprüche, das einstückig ausgebildet ist, wobei die mindestens zwei Mon-Lagemodule (10, 16, 38, 40) und das mindestens eine Verrastungsmodul (12, 44) miteinander verbunden sind.

8. Halteteil nach Anspruch 7, bei dem das mindestens eine Verrastungsmodul (12, 44) dazu ausgebildet ist, sich als Teil des Grundkörpers (14, 42) des Halteteils (8, 30) relativ zu diesem Grundkörper (14, 42) flexibel bewegen zu können.

9. Anordnung zur Montage und Demontage eines Sensors (2, 32) in einer Öffnung (4, 34) einer Vorrichtung, die ein Halteteil (8, 30) nach einem der voranstehenden Ansprüche und einen in der Öffnung (4, 34) der Vorrichtung anzuordnenden Sensor (2, 32) aufweist, **dadurch gekennzeichnet, dass** das mindestens eine Verrastungsmodul (12, 44) keilförmig ist und dazu ausgebildet ist, mit mindestens einem als Ausnehmung ausgebildeten Einrastmodul (22, 48) an einer Außenwandung (20, 46) des Sensors (2, 32) zusammenzuwirken.

10. Anordnung nach Anspruch 9, bei dem das mindestens eine Verrastungsmodul (12, 44) und das mindestens eine Einrastmodul (22, 48) des Sensors (2, 32) zueinander passförmig ausgebildet sind.

11. Anordnung nach Anspruch 9 oder 10, bei der das mindestens eine Verrastungsmodul (12, 44) und das mindestens eine Einrastmodul (22, 48) dazu ausgebildet sind, bei einer Bewegung des Sensors (2, 32) relativ zu dem Halteteil (8, 30) aneinander zu gleitet.

12. Anordnung nach einem der Ansprüche 9 bis 11, bei der ein Bereich, den das Halteteil (8, 30) umschließt, einen weitgehend runden Querschnitt aufweist, und bei dem die Außenwandung (20, 46) des Sensors (2, 32) einen weitgehend runden Querschnitt aufweist.

13. Verfahren zur Montage und Demontage eines Sensors (2, 32) in einer Öffnung (4, 34) einer Vorrichtung, bei dem ein Halteteil (8, 30) in der Öffnung (4, 34) angeordnet und über mindestens zwei Montagemodule (10, 16, 38, 40), die einen Abschnitt der Vorrichtung gemeinsam beaufschlagen, an der Vorrichtung arretiert wird, bei dem der Sensor (2, 32) in dem arretierten Halteteil (8, 30) zumindest teilweise aufgenommen und über das Halteteil (8, 30) an der Vorrichtung befestigt wird, bei dem mindestens ein verrastungsmodul (12, 44) des Halteteils (8, 30) bei der Montage des Sensors (2, 32) entlang einer Außenwandung (20, 46) des Sensors (2, 32) gleitet und bewegt wird, bis das Verrastungsmodul (12, 44) mit einem Einrastmodul (22, 48) an der Außenwandung (20, 46) des Sensors (2, 32) in Eingriff gerät, und bei dem der Sensor (2, 32) zur Demontage aus dem Halteteil (8, 30) herausgenommen wird, wobei mindestens ein erstes Montagemodul (10, 40) den Abschnitt der Vorrichtung derart beaufschlagt, dass das Halteteil (8, 30) in der Öffnung (4, 34) verbleibt, **dadurch gekennzeichnet, dass** das mindesten eine Einrastmodul (22, 48) als Ausnehmung ausgebildet, und das mindestens eine Verrastungsmodul (12, 44) keilförmig ausgebildet ist.

14. Verfahren nach Anspruch 13, bei dem der Abschnitt der Vorrichtung zwischen den mindestens zwei Montagemodulen (10, 16, 38, 40) angeordnet wird.

15. Verfahren nach Anspruch 13 oder 14, bei dem mindestens ein erstes Montagemodul (10, 40) beim Arretieren des Halteteils (8, 30) an der Vorrichtung relativ zu einem Grundkörper (14, 42) des Halteteils (8, 30) bewegt wird, wobei dieses mindestens eine erste Montagemodul (10, 40) an der Vorrichtung entlang gleitet.

16. Verfahren nach einem der Ansprüche 13 bis 15, bei dem eine Bewegung des Halteteils (8, 30) in Einbaurichtung gestoppt wird, sobald der Abschnitt der Vorrichtung von mindestens einem zweiten Montagemodul (16, 38) des Halteteils (8, 30) beaufschlagt wird.

17. Verfahren nach einem der Ansprüche 13 bis 16, bei dem das Halteteil (8, 30) in die Öffnung (4, 34) geschoben wird und nachfolgend der Sensor (2, 32) in das Halteteil (8, 30) geschoben wird.

18. Verfahren nach einem der Ansprüche 13 bis 17, bei dem das Halteteil (8, 30) ausgehend von einer Seite der Vorrichtung in der Öffnung (4, 34) angeordnet wird und der Sensor (2, 32) ausgehend von der anderen, entgegengesetzten Seite in dem Halteteil (8, 30) angeordnet wird.

19. Verfahren nach einem der Ansprüche 13 bis 17, bei dem das Halteteil (8, 30) ausgehend von einer Seite der Vorrichtung in der Öffnung (4, 34) angeordnet wird und der Sensor (2, 32) ausgehend von derselben Seite in dem Halteteil (8, 30) angeordnet wird.

20. Verfahren nach einem der Ansprüche 13 bis 19, bei dem das mindestens eine Verrastungsmodul (12, 44) des Halteteils (8, 30) beim Herausnehmen des Sensors (2, 32) aus dem Halteteil (8, 30) entlang der Außenwandung (20, 46) des Sensors (2, 32) gleitet und relativ zu dem Grundkörper (14, 42) des Halteteils (8, 30) bewegt wird.

## Claims

1. Holding section for mounting a sensor (2, 32) in an opening (4, 34) of a device, comprising at least two mounting modules (10, 16, 38, 40) designed to commonly engage a portion of the device so that the holding section (8, 30) is locked to the device after it has been successfully inserted into the opening (4, 34), and comprising at least one detent module (12, 44) designed to collaborate with an exterior wall (20, 46) of the sensor (2, 32) so that the sensor (2, 32) is to be mounted at the device by the holding section (8, 30), wherein the sensor (2, 32) is to be extracted from the holding section (8, 30) for demounting purposes, wherein at least one first mounting module (10, 40) engages the portion of the device so that the holding section (8, 30) remains in the opening (4, 34), **characterized in that** the at least one detent module (12, 44) is wedge-shaped and designed to cooperate with at least one snap-in module (22, 48) designed as a recess at an exterior wall (20, 46) of the sensor (2, 32).

2. Holding section according to Claim 1 designed in a self-locking manner.

3. Holding section according to Claim 1 or 2, wherein the at least two mounting modules (10, 16, 38, 40) are arranged so that the portion of the device is to be arranged between the at least two mounting modules (10, 16, 38, 40).

4. Holding section according to Claim 1, 2 or 3, wherein the at least one first mounting module (10, 40) is designed to be flexibly movable as a section of a base body (14, 42) of the holding section (8, 30) with respect to this base body (14, 42) and further to slide along the device in the mounting process.

5. Holding section according to Claim 4, wherein the at least one first mounting module (10, 40) is designed to be wedge-shaped, wherein an acute operation region of the at least one first mounting module (10, 40) is oriented in the mounting direction in which the holding section (8, 30) is to be moved when it is inserted into the opening (4, 34), and wherein a wide operation region of the at least one first mounting module (10, 40) is oriented opposite to this mounting direction and further designed to press against the portion of the device in case of a movement of the holding section (8, 30) contrary to the mounting direction.

6. Holding section according to one of the preceding Claims, wherein at least one second mounting module (16, 38) is rigidly arranged at the holding section (8, 30) and further arranged to abut at the portion of the device in a mounted state.

7. Holding section according to one of the preceding Claims which is integrally formed, wherein the at least two mounting modules (10, 16, 38, 40) and the at least one detent module (12, 44) are connected to each other.

8. Holding section according to Claim 7, wherein the at least one detent module (12, 44) is designed to be flexibly movable as a section of a base body (14, 42) of the holding section (8, 30) with respect to this base body (14, 42).

9. Arrangement for mounting and demounting a sensor (2, 32) in an opening (4, 34) of a device comprising a holding section (8, 30) according to one of the preceding Claims and a sensor (2, 32) to be arranged in the opening (4, 34) of the device, **characterized in that** the at least one detent module (12, 44) is wedge-shaped and designed to co-operate with at least one snap-in module (22, 48) designed as a recess at an exterior wall (20, 46) of the sensor (2, 32).

10. Arrangement according to Claim 9, wherein the at least one detent module (12, 44) and the at least one snap-in module (22, 48) of the sensor (2, 32) are designed in a shape-matching fashion.

11. Arrangement according to Claim 9 or 10, wherein the at least one detent module (12, 44) and the at least one snap-in module (22, 48) are designed to slide along each other in the case of a movement of the sensor (2, 32) with respect to the holding section (8, 30).

12. Arrangement according to one of Claims 9 to 11, wherein a region surrounded by the holding section (8, 30) has a substantially circular cross-section, and wherein the exterior wall (20, 46) of the sensor (2, 32) has a substantially circular cross-section.

13. Method for mounting and demounting a sensor (2, 32) in an opening (4, 34) of a device, wherein a holding section (8, 30) is arranged in the opening (4, 34) and locked to the device by at least two mounting modules (10, 16, 38, 40) commonly engaging a portion of the device, wherein the sensor (2, 32) is at least partially received in the locked holding section (8, 30) and fastened at the device by the holding section (8, 30), wherein at least one detent module (12, 44) of the holding section (8, 30) slides along an exterior wall (20, 46) of the sensor (2, 32) in the process of mounting the sensor (2, 32) and moved until the detent module (12, 44) engages a snap-in module (22, 48) at the exterior wall (20, 46) of the sensor (2, 32), and wherein the sensor (2, 32) is extracted from the holding section (8, 30) for demounting purposes, wherein at least one first mounting module (10, 40) engages the portion of the device so that the holding section (8, 30) remains in the opening (4, 34), **characterized in that** the at least one snap-in module (22, 48) is designed as a recess and the at least one detent module (12, 44) is designed in a wedge-shaped manner.

14. Method according to Claim 13, wherein the portion of the device is arranged between the at least two mounting modules (10, 16, 38, 40).

15. Method according to Claim 13 or 14, wherein at least one first mounting module (10, 40) is moved with respect to a base body (14, 42) of the holding section (8, 30) in the process of locking the holding section (8, 30) to the device, wherein this at least one first mounting module (10, 40) slides along the device.

16. Method according to one of Claims 13 to 15, wherein a movement of the holding section (8, 30) in the mounting direction is stopped as soon as the portion of the device is engaged by at least one second mounting module (16, 38) of the holding section (8, 30).

17. Method according to one of Claims 13 to 16, wherein the holding section (8, 30) is pushed into the opening (4, 34) and subsequently the sensor (2, 32) is pushed into the holding section (8, 30).

18. Method according to one of Claims 13 to 17, wherein the holding section (8, 30) is arranged in the opening (4, 34) starting from one side of the device, and the sensor (2, 32) is arranged in the holding section (8, 30) starting from the other opposite side.

19. Method according to one of Claims 13 to 17, wherein the holding section (8, 30) is arranged in the opening (4, 34) starting from one side of the device, and the sensor (2, 32) is arranged in the holding section (8, 30) starting from the same side.

20. Method according to one of Claims 13 to 19, wherein the at least one detent module (12, 44) of the holding section (8, 30) slides along the exterior wall (20, 46) of the sensor (2, 32) and is moved with respect to the base body (14, 42) of the holding section (8, 30) when the sensor (2, 32) is extracted from the holding section (8, 30).

## Revendications

1. Pièce de maintien pour le montage d'un capteur (2, 32) dans une ouverture (4, 34) d'un dispositif, qui comprend au moins deux modules de montage (10, 16, 38, 40) qui sont réalisés pour solliciter conjointement un tronçon du dispositif de telle façon que la pièce de maintien (8, 30), une fois la mise en place effectuée dans l'ouverture (4, 34), est bloquée sur le dispositif, et qui comprend au moins un module d'enclenchement (12, 44) qui est réalisé afin de coopérer avec une paroi extérieure (20, 46) du capteur (2, 32) de telle façon que le capteur (2, 32) doit être monté via la pièce de maintien (8, 30) sur le dispositif, dans laquelle le capteur (2, 32) doit être extrait pour le démontage hors de la pièce de maintien (8, 30), et au moins un premier module de montage (10, 40) sollicite le tronçon du dispositif de telle façon que la pièce de maintien (8, 30) demeure dans l'ouverture (4, 34), **caractérisée en ce que** ledit au moins un module d'enclenchement (12, 44) est en forme de coin et est réalisé pour coopérer avec au moins un module d'enclenchement antagoniste (22, 48), réalisé sous forme d'évidement, sur une paroi extérieure (20, 46) du capteur (2, 32).

2. Pièce de maintien selon la revendication 1, réalisée de manière autoverrouillable.

3. Pièce de maintien selon la revendication 1 ou 2, dans laquelle lesdits au moins deux modules de montage (10, 16, 38, 40) sont agencés de telle façon que le tronçon du dispositif doit être monté entre lesdits au moins deux modules de montage (10, 16, 38, 40).

4. Pièce de maintien selon la revendication 1, 2 ou 3, dans laquelle ledit au moins un premier module de montage (10, 40) est réalisé, en tant que partie d'un corps de base (14, 42) de la pièce de maintien (8, 30), mobile de manière flexible par rapport à ce corps de base (14, 42) et en outre de manière à coulisser le long du dispositif lors du montage sur celui-ci.

5. Pièce de maintien selon la revendication 4, dans laquelle ledit au moins un premier module de montage (10, 40) est réalisé en forme de coin, de sorte qu'une zone d'action pointue dudit au moins un premier module de montage (10, 40) est orientée dans la direction de montage dans laquelle la pièce de maintien (8, 30) doit être déplacé lors de la mise en place dans l'ouverture (4, 34), et de sorte qu'une zone d'action plus large dudit au moins un premier module de montage (10, 40) est orientée en sens opposé à cette direction de montage, et est en outre réalisé pour pousser contre le tronçon du dispositif lors d'un déplacement de la pièce de maintien (8, 30) en sens opposé à la direction de montage.

6. Pièce de maintien selon l'une des revendications précédentes, dans laquelle ledit au moins un second module de montage (16, 38) est réalisé de manière rigide sur la pièce de maintien (8, 30), et est en outre réalisé pour s'appliquer contre le tronçon du dispositif dans une situation montée.

7. Pièce de maintien selon l'une des revendications précédentes, réalisée d'une seule pièce, dans laquelle lesdits au moins deux modules de montage (10, 16, 38, 40) et ledit au moins un module d'enclenchement (12, 44) sont reliés les uns aux autres.

8. Pièce de maintien selon la revendication 7, dans laquelle ledit au moins un module d'enclenchement (12, 44) est réalisé pour pouvoir se déplacer de manière flexible, en tant que partie du corps de base (14, 42) de la pièce de maintien (8, 30), par rapport à ce corps de base (14, 42).

9. Agencement pour le montage et le démontage d'un capteur (2, 32) dans une ouverture (4, 34) d'un dispositif, qui comprend une pièce de maintien (8, 30) selon l'une des revendications précédentes et un capteur (2, 32) à agencer dans l'ouverture (4, 34) du dispositif, **caractérisé en ce que** ledit au moins un module d'enclenchement (12, 44) est en forme de coin et est réalisé pour coopérer avec au moins un module d'enclenchement antagoniste (22, 48), réalisé sous forme d'évidement, sur une paroi extérieure (20, 46) du capteur (2, 32).

10. Agencement selon la revendication 9, dans lequel ledit au moins un module d'enclenchement (12, 44) et ledit au moins un module d'enclenchement antagoniste (22, 48) du capteur (2, 32) sont réalisés avec des formes ajustées l'un par rapport à l'autre.

11. Agencement selon la revendication 9 ou 10, dans lequel ledit au moins un module d'enclenchement (12, 44) et ledit au moins un module d'enclenchement antagoniste (22, 48) sont réalisés afin de coulisser l'un contre l'autre lors d'un déplacement du capteur (2, 32) par rapport à la pièce de maintien (8, 30).

12. Agencement selon l'une des revendications 9 à 11, dans lequel une région que la pièce de maintien (8, 30) entoure présente une section largement arrondie, et dans lequel la paroi extérieure (20, 46) du capteur (2, 32) présente une section largement arrondie.

13. Procédé pour le montage et le démontage d'un capteur (2, 32) dans une ouverture (4, 34) d'un dispositif, dans lequel une pièce de maintien (8, 30) est agencée dans l'ouverture (4, 34) et est bloquée sur le dispositif via au moins deux modules de montage (10, 16, 38, 40), qui sollicitent conjointement un tronçon du dispositif, dans lequel le capteur (2, 32) est reçu au moins partiellement dans la pièce de maintien bloqué (8, 30) et est fixé via la pièce de maintien (8, 30) sur le dispositif, dans lequel au moins un module d'enclenchement (12, 44) de la pièce de maintien (8, 30) coulisse le long d'une paroi extérieure (20, 46) du capteur (2, 32) lors du montage du capteur (2, 32), et est déplacé jusqu'à ce que le module d'enclenchement (12, 44) vienne en engagement avec un module d'enclenchement antagoniste (22, 48) sur la paroi extérieure (20, 46) du capteur (2, 32), et dans lequel le capteur (2, 32) est extrait hors de la pièce de maintien (8, 30) pour le démontage, et au moins un premier module de montage (10, 40) sollicite le tronçon du dispositif de telle façon que la pièce de maintien (8, 30) demeure dans l'ouverture (4, 34), **caractérisé en ce que** ledit au moins un module d'enclenchement antagoniste (22, 48) est réalisé sous forme d'évidement, et ledit au moins un module d'enclenchement (12, 44) est réalisé en forme de coin.

14. Procédé selon la revendication 13, dans lequel le tronçon du dispositif est agencé entre lesdits au moins deux modules de montage (10, 16, 38, 40).

15. Procédé selon la revendication 13 ou 14, dans lequel au moins un premier module de montage (10, 40) est déplacé, lors du blocage de la pièce de maintien (8, 30) sur le dispositif, par rapport à un corps de base (14, 42) de la pièce de maintien (8, 30), et ledit au moins un premier module de montage (10, 40) coulisse le long du dispositif.

16. Procédé selon l'une des revendications 13 à 15, dans lequel un mouvement de la pièce de maintien (8, 30) dans la direction de montage est arrêté dès que le tronçon du dispositif est sollicité par au moins un second module de montage (16, 38) de la pièce de maintien (8, 30).

17. Procédé selon l'une des revendications 13 à 16, dans lequel la pièce de maintien (8, 30) est enfilée dans l'ouverture (4, 34), à la suite de quoi le capteur (2, 32) est enfilé dans la pièce de maintien (8, 30).

18. Procédé selon l'une des revendications 13 à 17, dans lequel la pièce de maintien (8, 30) est agencée dans l'ouverture (4, 34) depuis un côté du dispositif, et le capteur (2, 32) est agencé dans la pièce de maintien (8, 30) depuis l'autre côté opposé.

19. Procédé selon l'une des revendications 13 à 17, dans lequel la pièce de maintien (8, 30) est agencée dans l'ouverture (4, 34) depuis un côté du dispositif, et le capteur (2, 32) est agencé dans la pièce de maintien (8, 30) depuis le même côté.

20. Procédé selon l'une des revendications 13 à 19, dans lequel, lors de l'extraction du capteur (2, 32) hors de la pièce de maintien (8, 30), ledit au moins un module d'enclenchement (12, 44) de la pièce de maintien (8, 30) coulisse le long de la paroi extérieure (20, 46) du capteur (2, 32) et est déplacé par rapport au corps de base (14, 42) de la pièce de maintien (8, 30).
